# EUROPÄISCHE PATENTSCHRIFT

(11) **EP 2 748 023 B1**
(45) Veröffentlichungstag und Bekanntmachung des Hinweises auf die Patenterteilung: **14.10.2015**
(21) Anmeldenummer: 12740608.0
(22) Anmeldetag: 31.07.2012
(51) Int. Cl.: B60K 7/00, H02K 7/14

(54) **RADNABENANTRIEBSSYSTEM**
WHEEL HUB DRIVE SYSTEM
SYSTÈME D'ENTRAÎNEMENT DE MOYEU DE ROUE

(30) Priorität: 24.08.2011 DE 102011081503
(43) Veröffentlichungstag der Anmeldung: 02.07.2014
(73) Patentinhaber: Schaeffler Technologies AG & Co. KG, 91074 Herzogenaurach (DE)
(72) Erfinder: VOGLER, Tobias, 91074 Herzogenaurach (DE); FISCHER, Raphael, 91074 Herzogenaurach (DE); LAUGER, Mark, 91362 Pretzfeld (DE); STIRNWEIß, Dorothee, 96178 Pommersfelden (DE)
(86) Internationale Anmeldenummer: PCT/EP2012/064918
(87) Internationale Veröffentlichungsnummer: WO 2013/026659

(56) Entgegenhaltungen:
- DE-U1- 20 021 972
- US-A- 5 412 269

## Beschreibung

### Gebiet der Erfindung

Die Erfindung betrifft ein Radnabenantriebssystem mit einem innerhalb einer Felge anordenbaren Elektromotor, wobei der Elektromotor mittels eines, zumindest mittelbar mit einer Radnabe verbundenen, Rotors und eines feststehenden mit Wechselstrom beaufschlagbaren Stators gebildet ist.

### Stand der Technik

### Hintergrund der Erfindung

Radnabenantriebssysteme gehören zu den Direktantrieben, bei denen das Rad ohne Übersetzung, beispielsweise in Form eines Getriebes, angetrieben wird. Stattdessen ist die Umdrehungsgeschwindigkeit des Motors und des angetriebenen Rades zu jedem Zeitpunkt die gleiche.

Elektrische Direktantriebe auf der Basis von permanenterregten Synchronmotoren ermöglichen einen sehr hohen Wirkungsgrad, so dass die Batterie des Fahrzeuges nur einen Bruchteil der Energie speichern muss, wie vergleichsweise im Tank eines Fahrzeuges mit Brennkraftmaschine.

In der Vergangenheit wurden direkt antreibende Elektromotoren bereits in das Fahrzeugrad integriert, wobei Stator und Rotor des Elektromotors mit dem feststehenden Teil des Radlagers, beziehungsweise der Radnabe verbunden wurden. Dies führte zu einer Platzersparnis im Vergleich zu zentral antreibenden Elektromotoren, die mehrere Räder gleichzeitig antreiben.

Ein Leistungsumrichter im Fahrzeug enthält eine Leistungselektronik, die aus dem Gleichstrom der fahrzeugeigenen Batterie einen mehrphasigen Wechselstrom generiert, der zum Betrieb des Elektromotors verwendet wird. Der Einfachheit halber wird im folgenden von Umrichter gesprochen.

Problematisch ist in diesem Zusammenhang, dass eine Reibungsbremse aus Sicherheitsgründen ebenfalls vorgesehen werden muss und deshalb zusammen mit dem Elektromotor, also insbesondere mit dessen Stator und Rotor, in den Felgenraum des Rades integriert werden muss.

Dazu wurde bereits in der EP 1380459 B1 ein Radnabenantriebssystem vorgeschlagen, das auf dem Außenläuferprinzip (Rotor umfasst den Stator radial außen) basiert und eine Scheibenbremse innerhalb des Elektromotors anordnet.

US 5 412 269 A beschreibt ein gattungsgemäßer Radnabenantriebssystem.

### Aufgabenstellung

### Zusammenfassung der Erfindung

Die Aufgabe der Erfindung ist daher den Fahrzeuginnenraum von Komponenten weiter zu entlasten und gleichzeitig die Funktionalität und Leistungsfähigkeit des Radnabenantriebssystems zu gewährleisten oder sogar zu verbessern.

Die Aufgabe wird durch ein Radnabenantriebssystem der eingangs genannten Art durch ein Radnabenantriebssystem gemäß Anspruch 1 gelöst, wobei der Wechselstrom von einem Umrichter generierbar ist, der in einem axial neben dem Stator befestigten Umrichtergehäuse angeordnet ist.

Erfindungsgemäß weist das Radnabenantriebssystem einen innerhalb einer Felge anordenbaren Elektromotor auf. Der Elektromotor ist dazu vorgesehen an das Radlager angebracht zu werden. Dazu wird der Elektromotor radial zwischen Radlager und Felge angeordnet.

Der Elektromotor wird mittels eines zumindest mittelbar mit einer Radnabe verbundenen Rotors und eines feststehenden mit Wechselstrom beaufschlagbaren Stators gebildet. Der Rotor kann dabei mittelbar oder unmittelbar mit der Radnabe verbunden sein. Sind beide unmittelbar miteinander verbunden, so berühren sich Rotor und Radnabe. Bei einer mittelbaren Verbindung sind beide über wenigstens ein weiteres Element, wie zum Beispiel einem Rotorträger, miteinander verbunden. Dabei kann die Verbindungskraft durch Schrauben oder ähnliche Befestigungsmittel gewährleistet werden. Alternativ kommen neben einer kraftschlüssigen oder formschlüssigen Verbindung auch materialschlüssige Verbindungen, wie zum Beispiel, Schweißnähte in Frage.

Erfindungsgemäß ist der Wechselstrom von einem Umrichter generierbar, der in einem axial neben dem Stator befestigten Umrichtergehäuse angeordnet ist. Der Umrichter hat die Aufgabe einen Gleichstrom der Fahrzeugbatterie, die als Energiequelle für den Antrieb dient, in einen mehrphasigen Wechselstrom zu wandeln. Typischerweise wird ein dreiphasiger Wechselstrom verwendet.

Vorteilhafterweise ist der Stator axial zwischen einer Felgenfrontplatte der Felge und dem Umrichtergehäuse angeordnet. Alternativ zur Felgenfrontplatte können auch Radspeichen axial zum Stator angeordnet sein, beziehungsweise die Felgenfrontplatte kann eine oder mehrere Öffnungen aufweisen, um Material einzusparen oder aus optischen Gründen. Vorteilhafterweise lässt sich hierdurch auch die Optik der Felge verbessern. Die Speichen oder die Felgenfrontplatte sind Bestandteile der Felge, welche mit dem zylindrischen Felgenband verbunden sind.

Bei einer vorteilhaften Ausführungsform ist das Umrichtergehäuse am Stator oder an einem ersten Bauteil befestigt ist, an welchem auch der Stator befestigt ist. Wichtig ist eine möglichst nahe Anordnung des Stators an dem Umrichtergehäuse, da somit nur eine sehr geringe Strecke mit einer mehrphasigen Stromleitung überbrückt werden muss. Auf diese Weise wird der Radnabenantrieb elektromagnetisch sehr verträglich (EMV), da keine Wechselstromleitungen durch das Fahrzeug geführt werden müssen. Das Umrichtergehäuse kann zusätzlich die Wechselstromleitungen nach außen hin abschirmen. Dazu kann das Umrichtergehäuse teilweise oder ganz aus einem Metall, wie zum Beispiel Aluminium, gebildet sein.

Bei dem ersten Bauteil handelt es sich bevorzugt um eine Statorplatte, eine Bremsankerplatte oder eine ähnliche Platte. Um die gewünschte Nähe zwischen Stator und Umrichtergehäuse zu gewährleisten wird idealerweise das erste Bauteil als gemeinsame Befestigung verwendet. Gleichzeitig spart dies den Einsatz einer zweiten Halteplatte. Vorteilhafterweise wird das Umrichtergehäuse an der Statorplatte befestigt, die für die Halterung des Stators vorgesehen ist.

Bevorzugt ist das Umrichtergehäuse zumindest teilweise radial innerhalb der Felge angeordnet. Idealerweise wird es von der Felge, beziehungsweise vom Felgenband, radial ganz umfasst, womit sehr viel Bauraum, beispielsweise für eine Lenkeranordnung entsteht. Damit ist der Radnabenantrieb nicht nur auf ungelenkte Räder oder starre Achsaufbauten begrenzt.

Bei einer vorteilhaften Ausführungsform ragen aus dem Umrichtergehäuse oder aus einem Spulenkörper des Stators Kontakte heraus und sind in das Umrichtergehäuse, beziehungsweise in den Spulenkörper des Stators elektrisch kontaktierend einsteckbar und/oder verschraubbar. Damit bilden Stator und das Umrichtergehäuse eine Steckverbindung aus, wobei der Stator den Stecker und das Umrichtergehäuse die Buchse, oder umgekehrt, ausbilden kann. Dies würde zu einem Installationsvorteil führen und Wechselstromkabel überflüssig machen, da die zu den elektrischen Phasen korrespondierenden Kontakte als feststehende Leiterenden ausführbar sind.

Neben der elektrischen Anbindung kann auch eine Kühlmittelleitung oder mehrere Kühlmittelleitungen vom Umrichtergehäuse zum Stator geführt werden, womit eine gemeinsame Kühlung, beziehungsweise ein gemeinsamer Kühlkreislauf möglich wird. Eine Steckverbindung kann durch ineinander steckbare Leitungen oder auf ähnliche Weise umgesetzt werden.

Unter Spulenkörper wird der Bauteil der Stators verstanden, der die feststehenden Spulenwicklungen des Elektromotors enthält oder aufweist. Ferner gehört wenigstens ein Kühlelement zum Stator dazu, welches Kühlkanäle für eine Kühlflüssigkeit aufweist und die geeignet sind den Spulenkörper zu kühlen.

Bei einer vorteilhaften Ausführungsform sind die Kontakte stiftartig ausgebildet und ragen bei betriebsgemäßer Kontaktierung durch die Statorplatte, durch die Bremsankerplatte oder durch die ähnliche Platte hindurch. Somit kann die Steckverbindung auch zur Befestigung oder Positionierung des Stators und des Umrichtergehäuses beitragen. Außerdem kann auch eine Abschirmung der Kontakte durch den Stator und das Umrichtergehäuse erfolgen.

Vorteilhafterweise liegt das Umrichtergehäuse am Spulenkörper, an einem Kühlelement des Stators, an der Bremsankerplatte, an der Statorplatte und/oder an der ähnlichen Platte dichtend an.

Bevorzugt trägt die Bremsankerplatte wenigstens ein Bestandteil einer Reibungsbremse, insbesondere Scheibenbremse oder Trommelbremse. Die Bremsankerplatte trägt neben der Reibungsbremse auch noch den Stator und das Umrichtergehäuse mit Umrichter. Damit kommen der Bremsankerplatte mindestens drei Funktionen zu.

Die Bremswirkung beziehungsweise die Beschleunigungswirkung induzieren jeweils ein Drehmoment in die Bremsankerplatte, die deshalb derart steif ausgelegt werden muss, dass sie diese Drehmomente aufnehmen kann, ohne dabei plastisch verformt zu werden oder elastisch derart verformt wird, dass es zu Beschädigungen weiterer Bauteile des Radnabenantriebes kommt.

Bei einer vorteilhaften Ausführungsform ist das Bestandteil der Reibungsbremse ein Bremszylinder oder eine Bremszange.

Bei einer Trommelbremse hält die Bremsankerplatte mindestens den Bremszylinder und gegebenenfalls Zuleitungen, die die hydraulische Flüssigkeit zur Aktivierung der Bremse enthält. Dabei ist der Bremszylinder innerhalb der Trommel angeordnet und presst bei Aktivierung der Hydraulik eine Reibfläche oder zwei Reibflächen auf die Innenseite der Trommel.

Bei einer Scheibenbremse trägt die Bremsankerplatte wenigstens eine Bremszange, die das Aufpressen der Bremsbacken auf die rotierende Bremsscheibe sicherstellt.

Bei einer vorteilhaften Ausführungsform wir auch eine Ansteuerelektronik motornah, idealerweise innerhalb oder teilweise innerhalb der Felge angeordnet, die unter anderem das Zusammenspiel der Reibungsbremse und der generatorischen Bremse kontrolliert. Auf diese Weise kann die Effektivität der Bremsung verbessert werden, da die Ansprechzeiten der generatorischen Bremse deutlich kürzer, weil diese nicht auf die primäre Kommunikation über den CAN-Bus (Controller Area Network) zurückgreifen muss.

Der CAN-Bus macht Information von jedem Sensor für alle Steuergeräte nutzbar, ohne Informationsunterschiede zwischen den Steuergeräten zuzulassen, womit eine längere Kommunikationszeit in Kauf genommen wird. Daher ist das Steuersignal an die Reibungsbremse wegen der herkömmlichen CAN-Buskommunikation nicht in besonderer Weise beschleunigt. Folglich kann die generatorische Bremse zeitlich vor der Reibungsbremse aktiviert werden, womit für die später einsetzende Reibungsbremse in der Mehrzahl der Fälle nur ein Bruchteil der aufzubringenden Bremswirkung anfällt. Für die meisten Bremsungen weist der Elektromotor die erforderliche Leistung für eine 100%ige Übernahme des erforderlichen Bremsmomentes auf, jedoch im Durchschnitt wird 60% bis 90% der Bremsleistung vom Elektromotor aufgebracht werden und nur die verbleibenden 10% bis 40% fallen auf die Reibungsbremse. Folglich kann auch die geometrische Ausdehnung der Reibungsbremse, insbesondere deren radiale Ausdehnung, innerhalb des Elektromotors geringer ausfallen und für mehr Bauraum für den Elektromotor oder den Umrichter zur Verfügung stellen.

Des weiteren kann neben den Ansprechzeiten auch die Regelgüte durch die Ansteuerelektronik des Elektromotors verbessert werden, indem sowohl die Ansteuerelektronik und die Reibungsbremse das Steuersignal über den CAN-Bus erhalten, jedoch die Ansteuerelektronik des Elektromotors aktiv werden kann bevor, während und/oder nachdem die Reibungsbremse aktiv geworden ist.

Weitere vorteilhafte Ausbildungen und bevorzugte Weiterbildungen der Erfindung sind der Figurenbeschreibung und/oder den Unteransprüchen zu entnehmen.

Im Folgenden wird die Erfindung anhand der in den Figuren dargestellten Ausführungsbeispielen näher beschrieben und erläutert.

Es zeigen:
- Fig. 1: eine längs der Antriebsachse geschnittene Ansicht des innerhalb des Rades angeordneten Radnabenantriebssystems, und
- Fig. 2: eine fahrzeugseitige Ansicht des Radnabenantriebssystems im Fahrzeugrad.

### Ausführungsbeispiel

### Beschreibung der Zeichnungen

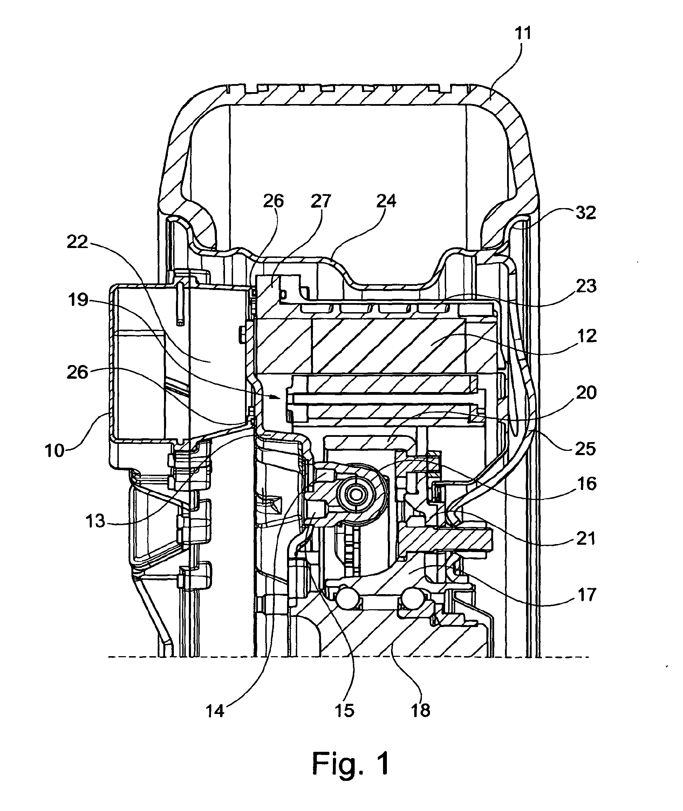

Fig. 1 zeigt eine längs der Antriebsachse geschnittene Ansicht des innerhalb des Rades angeordneten Radnabenantriebssystems.

Der Radnabenmotor ist radial innerhalb des Rades angeordnet, wobei der Reifen 11 auf die Felge 24 aufgezogen ist. Es handelt sich bei der Felge 24 um eine sogenannte Semi-Full-Face Felgenanordnung, die besonders viel radialen und axialen Motorraum zur Verfügung stellt, weil die Felgenfrontplatte aus Stahl gefertigt ist und die nahezu scheibenartig geformte Felgenfrontplatte direkt unter dem Felgenhorn 32 angebracht ist.

Der Stator besteht aus einem Kühlelement 27 mit Kühlkanälen 23, die mit einer Kühlflüssigkeit, insbesondere Wasser oder einer Wasser-Glykol Mischung, beaufschlagt werden. Radial innerhalb des Kühlelementes 27 ist der Spulenkörper 12 angeordnet, der eine gewisse Anzahl von Spulen, beziehungsweise deren Wicklungen enthält.

Da der Rotor 19 radial innerhalb des Stators angeordnet ist, handelt es sich bei dem Radnabenmotor um einen sogenannten Innenläufer.

Der Stator 27,12 ist an eine Statorplatte 13 angeschraubt und wird von dieser an seiner Position gehalten, sodass der Radialabstand zum Rotor 19 in Umfangsrichtung und beim Betrieb gleich bleibt. Die Statorplatte 13 ist am Achszapfen 18 des Radlagers befestigt, trägt aber außerdem den Bremszylinder 16 der Trommelbremse, welcher einen Druckbeaufschlagungsanschluss 15 und eine Entlüftung 14 für den hydraulisch angesteuerten Bremszylinder 16 enthält, die beide fahrzeugseitig zugänglich sind.

Folglich ist die Statorplatte 13 auch eine Bremsankerplatte 13, beziehungsweise weist deren Funktionen auf. Der Bremszylinder 16 und auch die zugehörige Bremstrommel 20 sind innerhalb des Stators und auch innerhalb des Rotors 19 angeordnet.

Die angetriebene Radnabe 17 wird durch den durch die wechselnden Magnetfelder des Stators bewegten Rotor 19 angetrieben. Die Antriebskraft wird über den Rotorträger 21 auf die Radnabe 17 übertragen.

Das Umrichtergehäuse 10 beinhaltet die nicht abgebildete Leistungselektronik des Umrichters im Innenraum 22. Diese ist axial, in der Nähe des Stator angebracht. Dazu wurde das Umrichtergehäuse 10 an der Bremsankerplatte 13 befestigt und mittels der Dichtung 26 gegen das Kühlelement 27 und die Bremsankerplatte 13 abgedichtet.

Vorteilhafterweise ist die Dichtung 26 aus einem leitenden Material gefertigt oder deren Material ist mit einer leitfähigen Schicht überzogen. Somit verbessert sich die EM-Verträglichkeit (EMV), weil sich die Abschirmung dadurch verbessern lässt.

Außerdem können auch andere statische oder dynamische Dichtungen mit den genannten Materialien hergestellt werden, um die Abschirmung an anderen Stellen zu verbessern. Diese Form der Abschirmung ist möglich geworden, da keine Wechselstromkabelleitungen aufgrund der Steckbarkeit oder Verschraubbarkeit des Umrichters mit dem Spulenkörper 12 mehr notwendig sind.

Das Radnabenantriebssystem kann als Radnabenantriebseinheit sowohl für den Einbau an eine Verbundlenkerachse, als auch für den Einsatz bei konventionellen Lenkerachsen, beziehungsweise Einzelradaufhängungen vorgesehen werden. Dazu müssten lediglich Radlager und die Bremsankerplatte 13 angepasst werden. Beispielsweise müssten Verbindungen zu den Lenkern an der Bremsankerplatte vorgesehen werden, die damit auch noch die Aufgabe eines Radträgers übernehmen würde.

Der Stator und der Rotor 19 bilden die essentiellen Bestandteile des innenlaufenden, permanentmagneterregten Synchronmotors, dessen Leistungsdichte und Momentendichte sehr hoch ist.

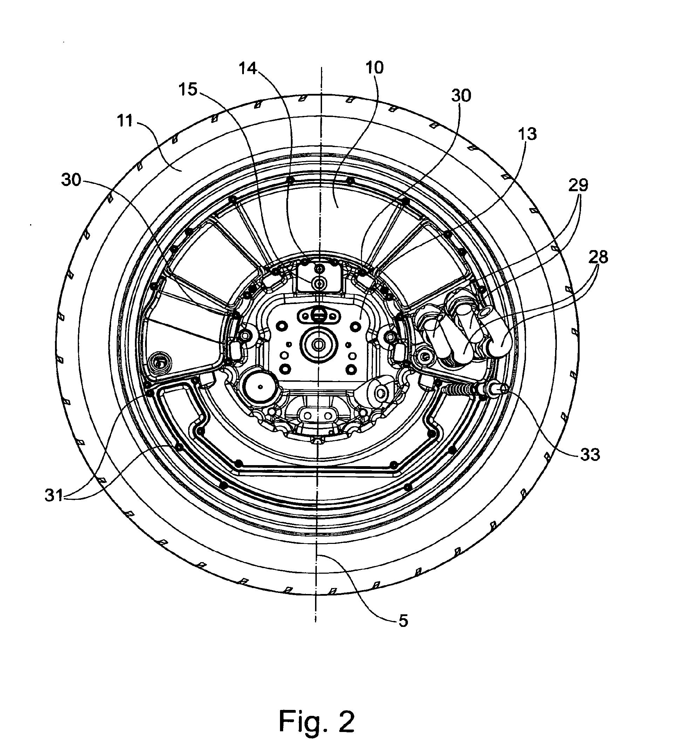

Fig. 2 zeigt eine fahrzeugseitige Ansicht des Radnabenantriebssystems im Fahrzeugrad.

Bei einem Schnitt entlang der Linie S erhält man die Ansicht der Figur 1.

Das Rad mit dem Radnabenantriebssystem ist derart orientiert, dass die nicht abgebildete Fahrbahn im unteren Bereich der Figur 2 liegen würde. Mit anderen Worten, das Umrichtergehäuse 10 ist nach oben orientiert und liegt radial außerhalb der Entlüftung 14 des Bremszylinders 16.

Das Umrichtergehäuse 10 erstreckt sich in beiden Umfangsrichtungen weiter, um weitere Komponenten, wie zum Beispiel eine Ansteuerelektronik aufzunehmen.

Das Radnabenantriebssystem ist derart ausgeführt, dass die Kühlanschlüsse 28, die Stromkabelanschlüsse 29 für den Gleichstrom, CAN- und Spannungsversorgung (12 Volt) und auch der Interlockkreis möglichst nahe aus dem System münden. Somit ist das Verlegen der Kabel und Schläuche im Fahrzeug ebenfalls besonders einfach.

Wie auch beim konventionellen Fahrzeug münden aus dem Radnabenantriebssystem die Bremsleitung 15, der Handbremsseilzug 33 und gegebenenfalls ein Kabel für einen unabhängigen ABS-Sensor.

Die Torque-Vectoring Funktion ist durch radselektive Momentenregelung möglich. Ebenso kann die ABS-Funktion gegebenenfalls durch den Elektromotor zumindest teilweise übernommen werden.

Zusammenfassend betrifft die Erfindung ein Radnabenantriebssystem mit einem innerhalb einer Felge anordenbaren Elektromotor, wobei der Elektromotor mittels eines zumindest mittelbar mit einer Radnabe verbundenen Rotors und eines feststehenden mit Wechselstrom beaufschlagbaren Stators gebildet ist. Mit dem Ziel mehr Raum für die Fahrzeuginsassen zu erlangen wird vorgeschlagen den Umrichter mit seiner gesamten Leistungselektronik am Stator anzuordnen, sodass das Radnabenantriebssystem mit Gleichstrom der Batterie des Fahrzeuges betrieben werden kann, beziehungsweise im Fahrzeug keine Wechselstromkabelleitungen verlegt werden müssen. Daher wird der Wechselstrom von dem Umrichter generiert, der in einem axial neben dem Stator befestigten Umrichtergehäuse angeordnet ist.

**Bezugszeichenliste**

| | | | |
|---|---|---|---|
| 10 | Umrichtergehäuse | 11 | Reifen |
| 12 | Stator | 13 | Bremsankerplatte |
| 14 | Entlüftung | 15 | Druckbeaufschlagungsanschluss |
| 16 | Bremszylinder | 17 | Radnabe |
| 18 | Achszapfen | 19 | Rotor |
| 20 | Bremstrommel | 21 | Rotorträger |
| 22 | Innenraum | 23 | Kühlkanäle |
| 24 | Felge | 25 | Felgenfrontplatte |
| 26 | Dichtring | 27 | Kühlelement |
| 28 | Kühlanschluss | 29 | Stromkabelanschluss |
| 30 | innenliegende Schraube | 31 | außenliegende Schraube |
| 32 | Felgenhorn | 33 | Handbremsseilzug |
| S | Linie | | |

## Patentansprüche

1. Radnabenantriebssystem mit einem innerhalb einer Felge (24) anordenbaren Elektromotor, wobei der Elektromotor mittels eines zumindest mittelbar mit einer Radnabe (17) verbundenen Rotors (19) und eines feststehenden mit Wechselstrom beaufschlagbaren Stators (12, 27) gebildet ist, **dadurch gekennzeichnet, dass** der Wechselstrom von einem Umrichter (22) generierbar ist, der in einem axial neben dem Stator (12, 27) befestigten Umrichtergehäuse (10) angeordnet ist.

2. System nach Anspruch 1, wobei der Stator (12, 27) axial zwischen einer Felgenfrontplatte (25) der Felge (24) und dem Umrichtergehäuse (10) angeordnet ist.

3. System nach Anspruch 1 oder 2, wobei das Umrichtergehäuse (10) am Stator (12, 27) oder an einem ersten Bauteil (13) befestigt ist, an welchem auch der Stator (12, 27) befestigt ist.

4. System nach Anspruch 3, wobei das erste Bauteil (13) eine Statorplatte (13), eine Bremsankerplatte (13) oder eine ähnliche Platte ist.

5. System nach einem der vorhergehenden Ansprüche, wobei das Umrichtergehäuse (10) zumindest teilweise radial innerhalb der Felge (24) angeordnet ist.

6. System nach einem der vorhergehenden Ansprüche, wobei aus dem Umrichtergehäuse (10) oder aus einem Spulenkörper (12) des Stators (12, 27) herausragende Kontakte in den Spulenköper (12) des Stators (12, 27), beziehungsweise in das Umrichtergehäuse (10) elektrisch kontaktierend einsteckbar und/oder verschraubbar sind.

7. System nach Anspruch 6, wobei die Kontakte stiftartig ausgebildet sind und bei betriebsgemäßer Kontaktierung durch die Statorplatte (13), durch die Bremsankerplatte (13) oder durch die ähnliche Platte hindurchragen.

8. System nach einem der vorhergehenden Ansprüche, wobei das Umrichtergehäuse (22) am Spulenkörper (12), an einem Kühlelement (27) des Stators (12, 27), an der Bremsankerplatte (13), an der Statorplatte (13) und/oder der ähnlichen Platte dichtend anliegt.

9. System nach Anspruch 4, wobei die Bremsankerplatte (13) wenigstens ein Bestandteil (14, 15, 16) einer Reibungsbremse, insbesondere Scheibenbremse, Keilbremse oder Trommelbremse, trägt.

10. System nach Anspruch 9, wobei das Bestandteil (14, 15, 16) der Reibungsbremse ein Bremszylinder (16) oder eine Bremszange ist.

## Claims

1. Wheel hub drive system having an electric motor which can be arranged within a wheel rim (24), wherein the electric motor is formed by means of a rotor (19), which is at least indirectly connected to a wheel hub (17), and a stationary stator (12, 27), to which alternating current can be applied, **characterized in that** the alternating current can be generated by a converter (22) which is arranged in a converter housing (10) which is mounted axially next to the stator (12, 27) .

2. System according to Claim 1, wherein the stator (12, 27) is arranged axially between a front panel (25) of the wheel rim (24) and the converter housing (10).

3. System according to Claim 1 or 2, wherein the converter housing (10) is mounted on the stator (12, 27) or on a first component (13) on which the stator (12, 27) is also mounted.

4. System according to Claim 3, wherein the first component (13) is a stator plate (13), a brake armature plate (13) or a similar plate.

5. System according to one of the preceding claims, wherein the converter housing (10) is arranged at least partially radially within the wheel rim (24).

6. System according to one of the preceding claims, wherein contacts which project out of the converter housing (10) or out of a coil former (12) of the stator (12, 27) can be plugged and/or screwed into the coil former (12) of the stator (12, 27) or into the converter housing (10) in an electrically contact-making manner.

7. System according to Claim 6, wherein the contacts are in the form of pins and project through the stator plate (13), through the brake armature plate (13) or through the similar plate when contact is made for operation.

8. System according to one of the preceding claims, wherein the converter housing (22) rests in a sealing manner on the coil former (12), on a cooling element (27) of the stator (12, 27), on the brake armature plate (13), on the stator plate (13) and/or on the similar plate.

9. System according to Claim 4, wherein the brake armature plate (13) carries at least one constituent part (14, 15, 16) of a friction brake, in particular disc brake, wedge brake or drum brake.

10. System according to Claim 9, wherein the constituent part (14, 15, 16) of the friction brake is a brake cylinder (16) or a brake caliper.

## Revendications

1. Système d'entraînement de moyeu de roue comprenant un moteur électrique pouvant être disposé à l'intérieur d'une jante (24), le moteur électrique étant formé au moyen d'un rotor (19) connecté au moins de manière indirecte à un moyeu de roue (17) et d'un stator fixe (12, 27) pouvant être sollicité avec un courant alternatif, **caractérisé en ce que** le courant alternatif peut être généré par un onduleur (22) qui est disposé dans un boîtier d'onduleur (10) fixé axialement à côté du stator (12, 27).

2. Système selon la revendication 1, dans lequel le stator (12, 27) est disposé axialement entre une plaque frontale de jante (25) de la jante (24) et le boîtier d'onduleur (10).

3. Système selon la revendication 1 ou 2, dans lequel le boîtier d'onduleur (10) est fixé au stator (12, 27) ou à un premier composant (13) sur lequel est également fixé le stator (12, 27).

4. Système selon la revendication 3, dans lequel le premier composant (13) est une plaque de stator (13), une plaque d'ancrage de frein (13), ou une plaque similaire.

5. Système selon l'une quelconque des revendications précédentes, dans lequel le boîtier d'onduleur (10) est disposé au moins en partie radialement à l'intérieur de la jante (24).

6. Système selon l'une quelconque des revendications précédentes, dans lequel des contacts faisant saillie hors du boîtier d'onduleur (10) ou d'un corps de bobine (12) du stator (12, 27) peuvent être enfichés et/ou vissés avec contact électrique dans le corps de bobine (12) du stator (12, 27), respectivement dans le boîtier d'onduleur (10).

7. Système selon la revendication 6, dans lequel les contacts sont réalisés sous forme de goupille et lors du contact fonctionnel conforme, traversent la plaque de stator (13), la plaque d'ancrage de frein (13) ou la plaque similaire.

8. Système selon l'une quelconque des revendications précédentes, dans lequel le boîtier d'onduleur (22) s'applique hermétiquement contre le corps de bobine (12), contre un élément de refroidissement (27) du stator (12, 27), contre la plaque d'ancrage de frein (13), contre la plaque de stator (13) et/ou contre la plaque similaire.

9. Système selon la revendication 4, dans lequel la plaque d'ancrage de frein (13) porte au moins un constituant (14, 15, 16) d'un frein à friction, en particulier d'un frein à disque, d'un frein à coin d'écartement, ou d'un frein à tambour.

10. Système selon la revendication 9, dans lequel le constituant (14, 15, 16) du frein à friction est un cylindre de frein (16) ou un étrier de frein.
